# FASCICULE DE BREVET EUROPEEN

(11) **EP 2 563 664 B1**
(45) Date de publication et mention de la délivrance du brevet: **08.01.2020**
(21) Numéro de dépôt: 11715985.5
(22) Date de dépôt: 24.03.2011
(51) Int. Cl.: B64D 29/06, F02K 1/09, F02K 1/76

(54) **NACELLE POUR MOTEUR D'AÉRONEF À INVERSEUR DE POUSSÉE À GRILLES ET À TUYÈRE ADAPTATIVE**
NACELLE FÜR FLUGZEUGTRIEBWERK MIT SCHUBUMKEHR MIT UMLENKGITTER UND ADAPTIVER DÜSE
NACELLE FOR AIRCRAFT ENGINE WITH CASCADE THRUST REVERSER WHAVING AN ADAPTIVE NOZZLE

(30) Priorité: 28.04.2010 FR 1053282
(43) Date de publication de la demande: 06.03.2013
(73) Titulaire: Safran Nacelles, 76700 Gonfreville-l'Orcher (FR)
(72) Inventeur: MORADELL-CASELLAS, Pierre, F-61100 Saint Georges Des Groseillers (FR)
(74) Mandataire: Delorme, Nicolas
(86) Numéro de dépôt international: PCT/FR2011/050627
(87) Numéro de publication internationale: WO 2011/135217

(56) Documents cités:
- EP-A2- 1 978 231
- WO-A1-2008/045056
- US-A- 5 806 302

## Description

La présente invention se rapporte à une nacelle pour moteur d'aéronef, à tuyère de section variable.

Comme cela est connu en soi, une nacelle de moteur d'aéronef permet de canaliser l'air extérieur vers ce moteur, et d'assurer l'éjection de cet air à grande vitesse de manière à fournir la poussée nécessaire.

Dans les turboréacteurs à double flux, le flux d'air brassé par la soufflante se divise, en aval de celle-ci, en un flux primaire (dit aussi « chaud ») qui rentre au cœur du turboréacteur pour y subir plusieurs compressions et une détente, et en un flux secondaire (dit aussi « froid »), qui circule à l'intérieur d'une veine sensiblement annulaire, définie d'une part par un carénage du moteur (structure interne fixe, appelée aussi « IFS »), et d'autre part par l'épaisseur de la nacelle.

Le flux d'air froid, qui sort en aval de la nacelle par une tuyère de sortie définie par le bord aval de cette nacelle, fournit l'essentiel de la poussée.

Pour des raisons d'optimisation aérodynamique, et par là même d'optimisation de la consommation de carburant, il est tout à fait avantageux de pouvoir régler la section de la sortie du flux d'air froid en aval de la nacelle : il est en effet utile de pouvoir augmenter cette section lors des phases de décollage et d'atterrissage, et de la réduire pendant les phases de croisière : on parle souvent de tuyère adaptative, ou bien encore de « VFN » (Variable Fan Nozzle), cf. le document EP 1 978 231 A2.

A noter que cette tuyère adaptative peut être monobloc, ou bien être formée de deux moitiés, ou bien encore être formée par la juxtaposition de volets déflecteurs : dans le cadre du présent document, le terme « tuyère de adaptative » couvrira tous ces cas de figure possibles.

Par ailleurs, comme cela est connu en soi, la nacelle incorpore très fréquemment des moyens d'inversion de poussée, mobiles entre une position de croisière, dite encore de « jet direct », et une position d'inversion de poussée, dite encore de « jet inverse », permettant de diriger vers l'amont de la nacelle une partie du flux d'air secondaire lors de l'atterrissage, ce qui contribue activement au freinage de l'aéronef.

Ces moyens d'inversion de poussée sont souvent du type à grilles de déviation, c'est-à-dire qu'ils comportent une série de grilles disposées en aval du carter de soufflante, à la périphérie de la veine de flux froid, ces grilles pouvant être découvertes sur commande par un capot d'inversion de poussée monté coulissant sur la structure de la nacelle.

La tuyère adaptative est située dans le prolongement aval du capot d'inversion de poussée, et il importe de pouvoir actionner ces deux parties de la nacelle de manière indépendante : on veut en particulier pourvoir augmenter la section de la tuyère adaptative sans actionner les moyens d'inversion de poussée, en particulier lors du décollage.

Pour réaliser cet actionnement indépendant, on connaît de la technique antérieure la solution consistant à utiliser des vérins à doubles tiges (dits aussi « télescopiques »), une tige actionnant le capot d'inversion de poussée, et l'autre tige actionnant la tuyère adaptative.

De tels vérins présentent un poids élevé, et ne sont de plus pas appropriés au cas particulier des tuyères adaptatives formées de volets déflecteurs pivotants : le pivotement de ces volets tend en effet à provoquer un désalignement des tiges des vérins.

La présente invention a ainsi notamment pour but de fournir une nacelle à inverseur de poussée à grilles de déviation et à tuyère adaptative comprenant des moyens d'actionnement indépendants de ces organes, dans laquelle ces moyens d'actionnement sont moins lourds que ceux de la technique antérieure, et adaptables notamment à une tuyère adaptative formée de volets déflecteurs rotatifs.

On atteint ce but de l'invention avec une nacelle pour moteur d'aéronef, comprenant :
- un cadre avant fixe,
- un capot d'inversion de poussée monté coulissant par rapport audit cadre avant entre une position de jet direct et une position de jet inversé,
- une tuyère adaptative disposée dans le prolongement aval de ce capot d'inversion,
- des vérins d'inversion de poussée, interposés entre ledit cadre avant et ledit capot d'inversion de poussée,
- des vérins de tuyère adaptative, interposés entre ledit capot d'inversion de poussée et ladite tuyère adaptative,
- des arbres moteurs, montés sur ledit cadre avant,
- des arbres de transmission, s'étendant le long dudit capot d'inversion de poussée jusqu'auxdits vérins de tuyère adaptative, et
- des moyens de couplage mécanique desdits arbres de transmission auxdits arbres moteurs, aptes à assurer la transmission de couple desdits arbres moteurs auxdits arbres de transmission lorsque ledit capot se trouve en position de jet direct, et à découpler les arbres de transmission des arbres moteurs lorsque ce capot coulisse vers sa position de jet inversé, et
- des moyens de verrouillage de la rotation desdits arbres de transmission avant le découplage complet de ces arbres de transmission de leurs arbres moteurs respectifs, et lorsque ce découplage est réalisé.

Grâce à ces caractéristiques, ont peut actionner la tuyère adaptative indépendamment de l'inverseur de poussée lorsque ce dernier se trouve en position jet direct.

En acceptant que les arbres de transmission des vérins de tuyère adaptative se déconnectent des arbres moteurs lors de l'inversion de poussée, on peut se défaire de moyens de transmission de trop grande longueur, ce qui permet de gagner en poids par rapport à une solution à vérins à tiges télescopiques.

De plus, en prévoyant que les vérins de tuyère adaptative puissent être actionnés par l'intermédiaire d'arbres de transmission qui s'étendent sur la longueur du capot d'inversion de poussée, on peut placer ces vérins en aval de ce capot, donc au plus proche de la tuyère adaptative, ce qui permet d'utiliser des vérins de petites dimensions.

Ceci permet de plus l'utilisation de tuyères adaptatives à volets déflecteurs pivotants, puisqu'un désalignement de ces vérins est possible dans la zone située en aval du capot d'inversion de poussée.

Enfin, les moyens de verrouillage de la rotation des arbres de transmission permettent, une fois le découplage réalisé, d'éviter que la tuyère adaptative ne se meuve de manière incontrôlée.

Suivant d'autres caractéristiques optionnelles de cette nacelle selon l'invention :
- lesdits moyens de verrouillage sont actionnés sous l'effet de la séparation dudit capot d'inversion de poussée dudit cadre avant lorsque ce capot coulisse vers sa position de jet inversé : grâce à de tels moyens de verrouillage, aucun dispositif motorisé spécifique de verrouillage n'est nécessaire, ce qui est très avantageux notamment du point de vue de la maintenance ;
- lesdits moyens de verrouillage comprennent, pour chaque arbre de transmission :
   - des moyens de blocage de crabots, montés fixes sur ledit capot d'inversion de poussée,
   - un tiroir à crabots monté coulissant et bloqué en rotation par rapport à l'arbre de transmission, ce tiroir comprenant d'une part des crabots de verrouillage, aptes à coopérer avec lesdits moyens de blocage, et d'autre part des crabots d'entraînement, aptes à coopérer avec une roue dentée entraînée par chaque arbre moteur respectif, et
   - des moyens élastiques de rappel dudit tiroir à crabots en direction de ladite roue dentée,
   les dimensions respectives de ces organes étant telles que :
   - lorsque ledit capot d'inversion se trouve en position de jet direct, lesdits crabots d'entraînement coopèrent avec leur roue dentée associée, et
   - lorsque ledit capot d'inversion s'écarte en aval dudit cadre avant, lesdits crabots de verrouillage viennent en prise avec lesdits moyens de blocage sous l'action desdits moyens élastiques avant que lesdits crabots d'entraînement n'aient échappé de leur roue dentée associée.

Ces moyens de verrouillage, de conception très simple, présentent un encombrement et un poids minimaux, et sont d'une maintenance particulièrement aisée.

Suivant encore une autre caractéristique optionnelle, la tuyère adaptative de ladite nacelle est du type à volets pivotants.

D'autres caractéristiques et avantages de la présente invention apparaîtront à la lumière de la description qui va suivre, et à l'examen des figures ci-annexées, dans lesquelles :
- la figure 1 représente, en couple axiale, la partie arrière d'une nacelle selon l'invention en configuration de croisière,
- la figure 2 représente, en vue radiale prise selon la direction Y (voir définition de cette direction ci-après), et de manière schématique, les moyens d'actionnement du capot d'inversion de poussée et de la tuyère adaptative, et
- les figures 3, 4 et 5 représentent, en positions respectivement de jet direct, intermédiaire et jet inversé, et de manière schématique et détaillée, les moyens de couplage de la figure 2.

Sur l'ensemble de ces figures, des références identiques ou analogues désignent des organes ou ensembles d'organes identiques ou analogues.

On a placé sur l'ensemble de ces figures un repère XYZ, dont les trois axes représentent respectivement les directions respectives longitudinale, transversale et verticale de la nacelle.

A noter que la flèche de l'axe X pointe vers l'amont de la nacelle, ce terme s'entendant par rapport au flux d'air destiné à traverser la nacelle en fonctionnement.

On notera également que la description qui va suivre est focalisée plus particulièrement sur une partie arrière de nacelle, c'est-à-dire sur la partie de la nacelle qui est située en aval du carter de soufflante, car c'est à cet endroit que se situe l'invention.

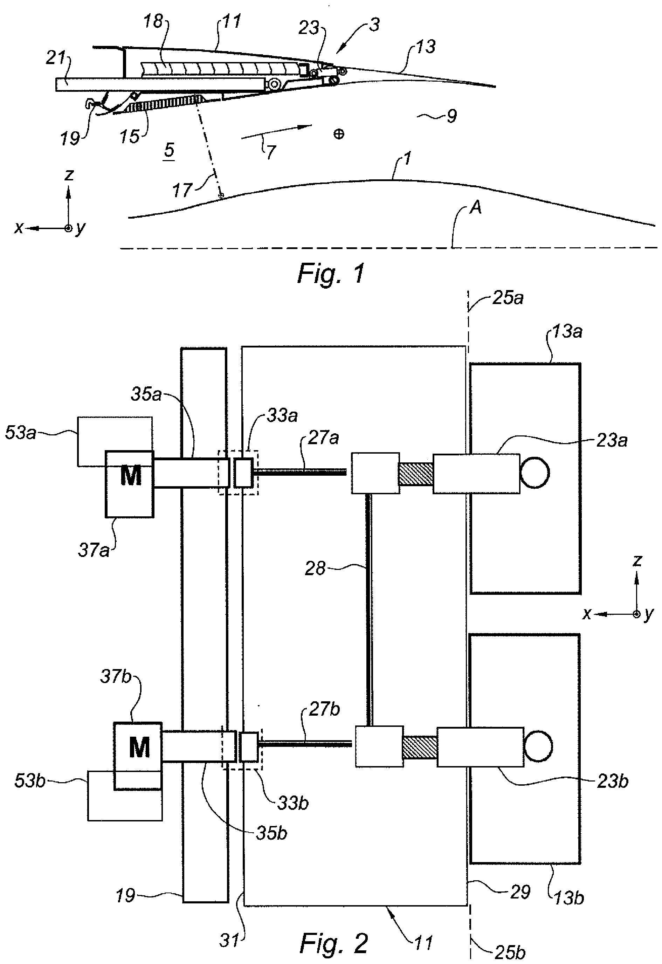

On se reporte à présent à la figure 1, sur laquelle on peut voir une partie arrière de nacelle selon l'invention en situation de croisière.

Comme cela est visible sur cette figure 1, cette partie arrière de nacelle comporte une structure intérieure fixe 1, destinée à caréner un turboréacteur (non représenté) centré autour de l'axe A et une structure extérieure 3 mobile, définissant une veine de flux d'air secondaire 5 dans laquelle doit circuler un flux d'air secondaire 7 engendré par la soufflante (non représentée), et sortant par une section de sortie 9 de manière à assurer la poussée de l'aéronef.

Plus précisément, la structure extérieure mobile 3 comporte une partie mobile amont 11 formant capot d'inversion de poussée, et une partie mobile aval 13 formant tuyère adaptative.

Sur le capot d'inversion de poussée 11 sont montés articulés des volets d'inversion de poussée 15, reliés chacun à la structure interne fixe 1 par des bielles 17.

Des grilles d'inversion de poussée 18 sont montées fixes sur un cadre avant 19 de forme sensiblement annulaire, lui-même fixé en aval du carter de soufflante (non représenté).

Des vérins d'inversion de poussée 21, interposés entre le cadre avant (fixe) 19 de la nacelle et le capot d'inversion de poussée 11, permettent de faire coulisser ce capot par rapport au cadre avant entre une position jet direct (visible à la figure 1) et une position d'inversion de poussée, dite encore de jet inverse (non représentée).

En situation de croisière représentée à la figure 1, le capot d'inversion de poussée 11 recouvre les grilles d'inversion de poussée 18, les volets d'inversion de poussée 15 étant quant à eux disposés dans le prolongement du capot d'inversion de poussée 11, de manière à permettre la libre circulation du flux d'air froid 7 dans la veine 5.

Pour réaliser l'inversion de poussée à l'atterrissage, le capot d'inversion de poussée 11 coulisse en aval des grilles de déviation 18, entraînant le pivotement des volets d'inversion de poussée 15 en travers de la veine de flux secondaire 5, provoquant la déviation du flux d'air secondaire 7 à travers les grilles 18, vers l'extérieur et vers l'amont de la nacelle.

Par ailleurs, des vérins 23 d'actionnement de la tuyère adaptative 13, interposés entre le capot d'inversion de poussée 11 et cette tuyère, permettent de faire coulisser cette tuyère entre une position amont dans la quelle la section de sortie 9 du flux d'air secondaire 7 est minimale (situation de croisière représentée à la figure 1), et une position aval dans laquelle cette section est maximale (pour le décollage et l'atterrissage).

Plus précisément, comme cela est visible à la figure 2, la tuyère adaptative 13 est en l'espèce composée d'une pluralité de volets déflecteurs 13a, 13b, montés chacun rotatif autour d'axes respectifs 25a, 25b, transversaux à l'axe général de la nacelle A.

Ces volets déflecteurs 13a, 13b sot actionnés respectivement par des vérins de tuyère adaptative 23a, 23b.

Ces vérins, qui peuvent être du type « à vis à bille » connu en soi, sont actionnés par des arbres de transmission respectifs 27a, 27b.

Ces arbres de transmission peuvent être des arbres souples du type « flexshaft », connu en soi.

On peut également prévoir un arbre d'interconnexion 28 entre les deux vérins 23a, 23b.

Les vérins 23a, 23b sont placés à proximité du bord aval 29 du capot d'inversion de poussée 11, et les arbres de transmission 27a, 27b s'étendent jusqu'au bord amont 31 de ce capot.

Des moyens de couplage respectifs 33a, 33b permettent de coupler les arbres de transmission 27a, 27b à des arbres moteurs respectifs 35a, 35b, mus par des moteurs respectifs 37a, 37b fixés sur le cadre avant 19.

Plus précisément, les moyens de couplage 33a, 33b permettent le couplage et le découplage des arbres de transmission 27a, 27b avec les arbres moteurs 35a, 35b, en fonction de la position du capot d'inversion de poussée 11, comme cela va être expliqué dans ce qui suit.

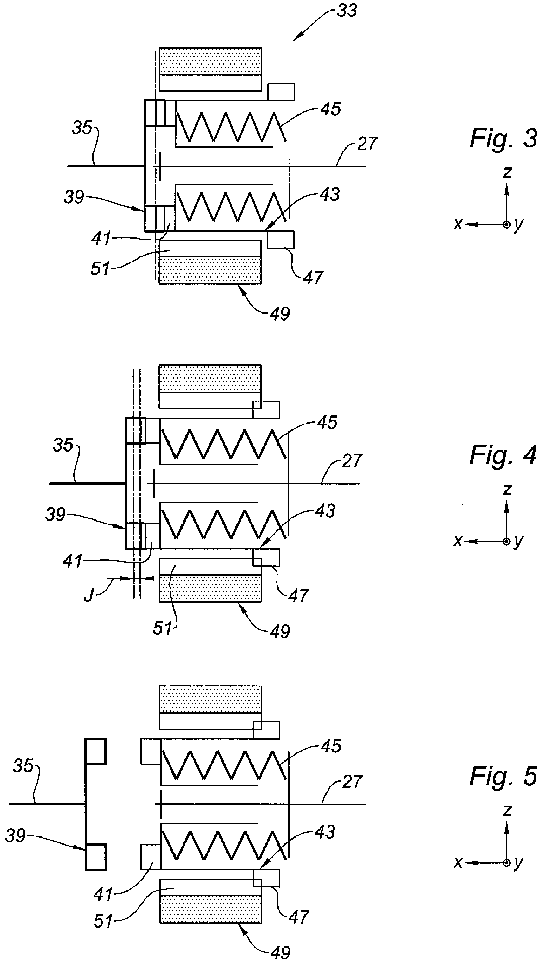

On se rapporte à présent aux figures 3, 4 et 5, sur lesquelles on a représenté de manière schématique l'un des dispositifs de couplage 33a, 33b, dans les différentes configurations qu'il peut occuper.

Comme on peut le voir à la figure 3, ce dispositif de couplage comprend d'une part, une roue dentée solidaire en rotation de l'arbre moteur 35, et d'autre part des crabots d'entraînement 41 solidaires d'un tiroir à crabots 43, lui-même monté coulissant sur l'arbre de transmission 27, et bloqué en rotation par rapport à cet arbre.

Des moyens élastiques pouvant comprendre un ou plusieurs ressorts 45 poussent les crabots d'entraînement 41 au contact de la roue dentée 39, assurant la transmission de couple entre l'arbre moteur 35 et l'arbre de transmission 27 lorsque le capot d'inversion de poussée 11 se trouve dans sa position amont, bord à bord avec le cadre avant fixe 19 (position de jet direct).

Des moyens de verrouillage sont en outre prévus : ces moyens comprennent d'une part des crabots de verrouillage 47 montés sur le tiroir à crabots 43, et d'autre part, les moyens 49 de blocage en rotation des crabots de verrouillage 47, ces moyens 49 pouvant comporter des dents 51 aptes à coopérer avec les crabots de verrouillage 47 dans les conditions qui vont être explicitées à présent.

Lorsqu'à partir de la position de croisière (jet direct) de la figure 3, on actionne les vérins d'inversion de poussée 21 (voir figure 1) pour faire coulisser le capot d'inversion de poussée 11 en aval du cadre avant fixe 19, un jeu longitudinal J (c'est-à-dire selon la direction X) apparaît peu à eu entre la roue dentée 39 et les crabots d'entraînement 41 : les moyens élastiques 45 tendent à combler ce jeu en poussant le chariot à crabots 43 en direction de la roue dentée 39, entraînant la venue en prise des crabots de verrouillage 47 avec les dents 51 des moyens de blocage de crabot 49, comme cela est visible à la figure 4.

Durant cette phase, les arbres moteurs 35 ne peuvent plus entraîner en rotation les arbres de transmission 27, lesquels sont verrouillés.

Ce verrouillage perdure lorsque le capot d'inversion de poussée 11 continue sa course vers l'aval de la nacelle, durant laquelle les crabots d'entraînement 41 échappent à roue dentée 39, comme cela est indiqué à la figure 5.

Comme on peut le comprendre, grâce au système de couplage et de verrouillage selon l'invention, on peut actionner les volets déflecteurs 13a, 13b au moyen des vérins de tuyère adaptative 23a, 23b lorsque le capot d'inversion de poussée 11 se trouve en position de jet direct, puis maintenir ces volets 13a, 13b dans la position ainsi réglée lorsque le capot d'inversion de poussée 11 coulisse vers sa position de jet inversé.

Ceci est permis grâce au fait que les crabots de verrouillage 47 viennent en prise avec les dents de blocage 51 sous l'action des moyens élastiques 45 avant que les crabots d'entraînement 41 n'échappent de la roue dentée 39.

Le dispositif selon l'invention fournit donc des moyens d'actionnement indépendants du capot d'inversion de poussée 11 et de la tuyère adaptative 13, sans qu'il soit nécessaire de prévoir des mécanismes encombrants et onéreux du type à vérin télescopique.

Pour faciliter le retour en prise des crabots d'entraînement 41 avec la roue dentée 39, on peut bien entendu prévoir que les profils respectifs de ces crabots et des dents de la roue 39 présentent les pentes nécessaires facilitant leur engagement mutuel.

On notera également que l'on prévoit des freins respectifs 53a, 53b (voir figure 2) des moteurs 37a, 37b, permettant d'immobiliser la tuyère adaptative 13 lorsque le capot d'inversion de poussée 11 se trouve en position de jet direct, et donc que les crabots de verrouillage 47 ne sont pas engagés avec les dents de blocage 51.

Bien entendu, la présente invention n'est nullement limitée aux modes de réalisation décrits et représentés, fournis à titre de simples exemples.

## Revendications

1. Nacelle pour moteur d'aéronef, comprenant :
- un cadre avant fixe (19),
- un capot d'inversion de poussée (11) monté coulissant par rapport audit cadre avant (19) entre une position de jet direct et une position de jet inversé,
- une tuyère adaptative (13, 13a, 13b) disposée dans le prolongement aval de ce capot d'inversion (11),
- des vérins d'inversion de poussée (21), interposés entre ledit cadre avant (19) et ledit capot d'inversion de poussée (11),
- des vérins de tuyère adaptative (23, 23a, 23b), interposés entre ledit capot d'inversion de poussée et ladite tuyère adaptative (13, 13a, 13b),
- des arbres moteurs (35a, 35b), montés sur ledit cadre avant (19),
- des arbres de transmission (27a, 27b), s'étendant le long dudit capot d'inversion de poussée (11) jusqu'auxdits vérins de tuyère adaptative (23, 23a, 23b), et
- des moyens de couplage mécanique (33a, 33b) desdits arbres de transmission (27a, 27b) auxdits arbres moteurs (35a, 35b), aptes à assurer la transmission de couple desdits arbres moteurs (35a, 35b) auxdits arbres de transmission (27a, 27b) lorsque ledit capot (11) se trouve en position de jet direct, et à découpler les arbres de transmission (27a, 27b) des arbres moteurs (35a, 35b) lorsque ce capot (11) coulisse vers sa position de jet inversé, **caractérisée en ce que** la nacelle comprend
- des moyens de verrouillage (47, 49) de la rotation desdits arbres de transmission (27a, 27b) avant le découplage complet de ces arbres de transmission (27a, 27b) de leurs arbres moteurs respectifs (35a, 35b), et lorsque ce découplage est réalisé.

2. Nacelle selon la revendication 1, dans laquelle lesdits moyens de verrouillage (47, 49) sont actionnés sous l'effet de la séparation dudit capot d'inversion de poussée (11) dudit cadre avant (19) lorsque ce capot (11) coulisse vers sa position de jet inversé.

3. Nacelle selon la revendication 2, dans laquelle lesdits moyens de verrouillage comprennent, pour chaque arbre de transmission (27a, 27b) :
- des moyens de blocage de crabots (49, 51), montés fixes sur ledit capot d'inversion de poussée (11),
- un tiroir à crabots (43) monté coulissant et bloqué en rotation par rapport à l'arbre de transmission (27a, 27b), ce tiroir (43) comprenant d'une part des crabots de verrouillage (47), aptes à coopérer avec lesdits moyens de blocage (49, 51), et d'autre part des crabots d'entraînement (41), aptes à coopérer avec une roue dentée (39) entraînée par chaque arbre moteur respectif (35a, 35b), et
- des moyens élastiques (45) de rappel dudit tiroir à crabots (43) en direction de ladite roue dentée (39),
les dimensions respectives de ces organes étant telles que :
- lorsque ledit capot d'inversion (11) se trouve en position de jet direct, lesdits crabots d'entraînement (41) coopèrent avec leur roue dentée associée (39), et
- lorsque ledit capot d'inversion (11) s'écarte en aval dudit cadre avant (19), lesdits crabots de verrouillage (47) viennent en prise avec lesdits moyens de blocage (49, 51) sous l'action desdits moyens élastiques (45) avant que lesdits crabots d'entraînement (41) n'aient échappé de leur roue dentée associée (39).

4. Nacelle selon l'une quelconque des revendications précédentes, dans laquelle la tuyère adaptative (13) de ladite nacelle est du type à volets pivotants (13a, 13b).

## Patentansprüche

1. Gondel für einen Flugzeugmotor, umfassend:
- einen festen vorderen Rahmen (19),
- eine Schubumkehr-Abdeckung (11), die in Bezug auf den vorderen Rahmen (19) zwischen einer Direktstrahl-Position und einer Umkehrstrahl-Position gleitend montiert ist,
- eine Düse mit veränderlicher Geometrie (13, 13a, 13b), die in der stromabwärtigen Verlängerung dieser Umkehr-Abdeckung (11) angeordnet ist,
- Schubumkehr-Zylinder (21), die zwischen dem vorderen Rahmen (19) und der Schubumkehr-Abdeckung (11) eingesetzt sind,
- Zylinder einer Düse mit veränderlicher Geometrie (23, 23a, 23b), die zwischen der Schubumkehr-Abdeckung und der Düse mit veränderlicher Geometrie (13, 13a, 13b) eingesetzt sind,
- Motorwellen (35a, 35b), die auf dem vorderen Rahmen (19) montiert sind,
- Übertragungswellen (27a, 27b), die sich entlang der Schubumkehr-Abdeckung (11) bis zu den Zylindern einer Düse mit veränderlicher Geometrie (23, 23a, 23b) erstrecken, und
- Mittel zum mechanischen Koppeln (33a, 33b) der Übertragungswellen (27a, 27b) mit den Motorwellen (35a, 35b), die imstande sind, für die Übertragung eines Moments der Motorwellen (35a, 35b) auf die Übertragungswellen (27a, 27b) zu sorgen, wenn sich die Abdeckung (11) in der Direktstrahl-Position befindet, und die Übertragungswellen (27a, 27b) von den Motorwellen (35a, 35b) abzukoppeln, wenn die Abdeckung (11) in ihre einer Umkehrstrahl-Position gleitet, **dadurch gekennzeichnet, dass** die Gondel Folgendes umfasst
- Mittel zum Verriegeln (47, 49) der Drehung der Übertragungswellen (27a, 27b) vor dem vollständigen Abkoppeln dieser Übertragungswellen (27a, 27b) von ihren jeweiligen Motorwellen (35a, 35b), und wenn dieses Abkoppeln durchgeführt ist.

2. Gondel nach Anspruch 1, wobei die Mittel zum Verriegeln (47, 49) unter der Wirkung der Trennung der Schubumkehr-Abdeckung (11) von dem vorderen Rahmen (19) betätigt wird, wenn die Abdeckung (11) in ihre Umkehrstrahl-Position gleitet.

3. Gondel nach Anspruch 2, wobei die Mittel zum Verriegeln für jede Übertragungswelle (27a, 27b) Folgendes umfassen:
- Klauen-Sperrmittel (49, 51), die fest auf der Schubumkehr-Abdeckung (11) montiert sind,
- einen Klauen-Einschub (43), der gleitend montiert und in Bezug auf die Übertragungswelle (27a, 27b) drehgesperrt montiert ist, wobei dieser Einschub (43) einerseits Verriegelungsklauen (47) umfasst, die imstande sind, mit den Sperrmitteln (49, 51) zusammenzuwirken, und andererseits Antriebsklauen (41), die imstande sind, mit einem Zahnrad (39) zusammenzuwirken, das von jeder jeweiligen Motorwelle (35a, 35b) angetrieben wird, und
- elastische Mittel (45) zum Rückstellen des Klauen-Einschubs (43) in Richtung des Zahnrades (39),
wobei die jeweiligen Abmessungen dieser Organe derart sind, dass:
- wenn sich die Umkehr-Abdeckung (11) in Direktstrahl-Position befindet, die Antriebsklauen (41) mit ihrem zugeordneten Zahnrad (39) zusammenwirken, und
- wenn die Umkehr-Abdeckung (11) von dem vorderen Rahmen (19) stromabwärts abrückt, die Verriegelungsklauen (47) unter Betätigung der elastischen Mittel (45) mit den Sperrmitteln (49, 51) in Eingriff kommen, bevor sich die Antriebsklauen (41) ihrem zugeordneten Zahnrad (39) entzogen haben.

4. Gondel nach einem der vorstehenden Ansprüche, wobei die Düse mit veränderlicher Geometrie (13) der Gondel in der Art mit schwenkbaren Klappen (13a, 13b) ist.

## Claims

1. A nacelle for an aircraft engine, comprising:
- a fixed front frame (19),
- a thrust reverser cowl (11) slidably mounted relative to said front frame (19) between a direct jet position and a reverse jet position,
- an adaptive nozzle (13, 13a, 13b) disposed in the downstream extension of this thrust reverser cowl (11),
- thrust reverser cylinders (21), interposed between said front frame (19) and said thrust reverser cowl (11),
- adaptive nozzle cylinders (23, 23a, 23b), interposed between said thrust reverser cowl and said adaptive nozzle (13, 13a, 13b),
- drive shafts (35a, 35b), mounted on said front frame (19),
- transmission shafts (27a, 27b) extending along said thrust reverser cowl (11) up to said adaptive nozzle cylinders (23, 23a, 23b), and
- means (33a, 33b) for mechanically coupling said transmission shafts (27a, 27b) to said drive shafts (35a, 35b), adapted to ensure the torque transmission from said drive shafts (35a, 35b) to said transmission shafts (27a, 27b) when said cowl (11) is in the direct jet position, and to decouple the transmission shafts (27a, 27b) from the drive shafts (35a, 35b) when the cowl (11) slides towards its reverse jet position,
**characterized in that** the nacelle comprises
- means (47, 49) for locking the rotation of said transmission shafts (27a, 27b) before the complete decoupling of these transmission shafts (27a, 27b) from their respective drive shafts (35a, 35b), and when this decoupling is achieved.

2. The nacelle according to claim 1, wherein said locking means (47, 49) are actuated under the effect of the separation of said thrust reverser cowl (11) from said front frame (19) when this cowl (11) slides towards its reverse jet position.

3. The nacelle according to claim 2, wherein said locking means include, for each transmission shaft (27a, 27b):
- means (49, 51) for blocking dog-clutches, fixedly mounted on said thrust reverser cowl (11),
- a dog-clutch slide (43) slidably mounted and blocked in rotation relative to the transmission shaft (27a, 27b), this slide (43) comprising, on the one hand, locking dog-clutches (47), adapted to cooperate with said blocking means (49, 51) and, on the other hand, drive dog-clutches (41), adapted to cooperate with a gear (39) driven by each respective drive shaft (35a, 35b), and
- elastic means (45) for biasing said dog-clutch slide (43) in the direction of said gear (39),
the respective dimensions of these members being such that:
- when said thrust reverser cowl (11) is in the direct jet position, said drive dog-clutches (41) cooperate with their associated gear (39), and
- when said thrust reverser cowl (11) deviates downstream of said front frame (19), said locking dog-clutches (47) engage with said blocking means (49, 51) under the action of said elastic means (45) before said drive dog-clutches (41) have escaped from their associated gear (39).

4. The nacelle according to any one of the preceding claims, wherein the adaptive nozzle (13) of said nacelle is of the type with pivoting flaps (13a, 13b).
